## Europäisches Patentamt
## European Patent Office
## Office européen des brevets

(19)

(11) Veröffentlichungsnummer: **0 339 457**

**A1**

(12) **EUROPÄISCHE PATENTANMELDUNG**

(21) Anmeldenummer: **89107018.7**

(22) Anmeldetag: **19.04.89**

(51) Int. Cl.4: **C02F 11/18 , C02F 11/02 , C02F 11/04**

(30) Priorität: **23.04.88 DE 3813844**

(43) Veröffentlichungstag der Anmeldung:
**02.11.89 Patentblatt 89/44**

(84) Benannte Vertragsstaaten:
**AT DE FR GB**

(71) Anmelder: **Fuchs, Leonhard, Dipl.-Ing.**
**Im Stocktal 2**
**D-5440 Mayen(DE)**

Anmelder: **Fuchs, Martin**
**Im Stocktal 2**
**D-5440 Mayen(DE)**

(72) Erfinder: **Fuchs, Leonhard, Dipl.-Ing.**
**Im Stocktal 2**
**D-5440 Mayen(DE)**
Erfinder: **Fuchs, Martin**
**Im Stocktal 2**
**D-5440 Mayen(DE)**

(74) Vertreter: **Werner, Hans-Karsten, Dr. et al**
**Deichmannhaus am Hauptbahnhof**
**D-5000 Köln 1(DE)**

(54) **Verfahren zur Entseuchung von Klärschlamm.**

(57) Das Verfahren zur Entseuchung von Klärschlamm vor dem Einbringen in eine anaerobe Klärschlammaufbereitung unter Gewinnung von Methangas durch Erhitzung des Klärschlammes in einer vorgeschalteten Entseuchungsstufe auf 50 bis 70° C, vorzugsweise 55 bis 65° C, für eine Dauer von 1 bis 72 Stunden, vorzugsweise 12 bis 36 Stunden, bei intensiver Durchmischung des Klärschlammes mit einem sauerstoffhaltigen Gas wird durchgeführt, indem als sauerstoffhaltiges Gas ein Gemisch aus 10 bis 70 Vol.-% Frischluft mit 30 bis 90 Vol.-% Abgas aus der Entseuchungsstufe verwendet wird, wobei der Sauerstoffgehalt des Gasgemisches im Bereich von 5 bis 15 Vol.-%, vorzugsweise 7 bis 12 Vol.-% gehalten wird.

EP 0 339 457 A1

## Verfahren zur Entseuchung von Klärschlamm

Gegenstand der vorliegenden Erfindung ist ein Verfahren zur Entseuchung von Klärschlamm vor dem Einbringen in eine anaerobe Klärschlammaufbereitung unter Gewinnung von Methangas durch Erhitzung des Klärschlammes in einer vorgeschalteten Entseuchungsstufe auf 50 bis 70°C, vorzugsweise 55 bis 65°C, für eine Dauer von 1 bis 72 Stunden, vorzugsweise 12 bis 36 Stunden, bei intensiver Durchmischung des Klärschlammes mit einem sauerstoffhaltigen Gas.

Ein Verfahren dieser Gattung ist beschrieben worden in "Korrespondenz Abwasser", 34. Jhrg., Heft 4/1987, Seiten 331 bis 338. Bei dem dort beschriebenen Verfahren wird die Entseuchung durchgeführt in der ersten aeroben thermophilen Verfahrensstufe, wobei optimale Ergebnisse erzielt würden bei einer Aufenthaltszeit des Klärschlammes in der ersten Stufe zwischen 12 und 24 Stunden und einer Temperatur zwischen 55 und 62°C. Als sauerstoffhaltiges Gas wird Luftsauerstoff eingesetzt, der dadurch intensiv mit dem Klärschlamm vermischt wird, daß die Frischluft über hocheffiziente Ejektorbelüfter in die Flüssigphase eingetragen wird. Als Ejektorbelüfter haben sich insbesondere Wendelbelüfter und Umwälzbelüfter der Anmelderin bewährt. Außerdem weist dieses System ein Schaumkontrollsystem auf, nämlich den von der Anmelderin vertriebenen Schaumschneider.

Obwohl sich dieses Verfahren bereits als wirtschaftlich und zuverlässig erwiesen hat, sollte versucht werden, die Flexibilität und Wirtschaftlichkeit des Verfahrens weiter zu verbessern, wobei oberstes Gebot war, eine zuverlässige Entseuchung zu gewährleisten, und zwar auch bei schwankender Belastung und schwankender Zusammensetzung des anfallenden Klärschlammes, der meistens aus einem Gemisch von Primär- und/oder Überschußschlamm besteht. Dabei ist weiterhin zu beachten, daß die zuverlässige Entseuchung nicht nur durch eine ausreichend lange Erhitzung auf Temperaturen von 50 bis 70°C erzielt wird, sondern auch durch die Metabolisierung der meistens mesophilen, infektiösen Keime durch die in der Entseuchungsstufe rasch wachsenden thermophilen Mikroorganismen. Insbesondere bei Wachstumsstörungen dieser thermophilen Mikroorganismen muß daher Sorge dafür getragen werden, daß Verweilzeit, Temperatur und Wachstumsbedingungen der Sitation angepaßt werden können.

Es wurde jetzt gefunden, daß diese Aufgabe besonders einfach und wirtschaftlich dadurch gelöst werden kann, daß als sauerstoffhaltiges Gas ein Gemisch aus 10 bis 70 Vol.-% Frischluft mit 30 bis 90 Vol.-% Abgas aus der Entseuchungsstufe verwendet wird, wobei der Sauerstoffgehalt des Gasgemisches im Bereich von 5 bis 15 Vol.-%, vorzugsweise 7 bis 12 Vol.-% gehalten wird.

Unter diesen Verfahrensbedingungen ist es ohne weiteres möglich, die Verweilzeit in der Entseuchungsstufe zu verlängern, ohne daß es zu einem unerwünschten verstärkten Abbau des Klärschlammes kommt, indem man den Anteil an Frischluft verringert. Soll hingegen die Verweilzeit des Klärschlammes in der Entseuchungsstufe wieder verkürzt werden, wird auch der Anteil an Frischluft wieder erhöht. In gleicher Weise kann auf Temperaturschwankungen und vor allem Wachstumsschwankungen der thermophilen Mikroorganismen reagiert werden, wobei der Sauerstoffgehalt nicht unter 5 Vol.-% sinken sollte, da sonst anaerobe Prozesse beginnen würden. Unter anaeroben Bedingungen kann es zu starken Veränderungen des pH-Wertes sowie zu Wachstumsstörungen der aeroben thermophilen Mikroorganismen kommen.

Durch die erfindungsgemäße Wiederverwendung eines erheblichen Teils des Abgases der Entseuchungsstufe bei der Begasung des Klärschlammes wird auch die Wärmebilanz positiv beeinflußt, da weniger Frischluft in das System eingeführt wird und somit weniger Wärme mit den Abgasen aus dem System abgeführt wird.

Die Temperatur in der Entseuchungsstufe wird überwiegend aufrechterhalten durch Wärmeaustausch zwischen dem bereits entseuchten Schlamm und der frischen Charge Rohschlamm. Weiterhin sollte die Entseuchungsstufe eine Außenheizung aufweisen, die vorzugsweise betrieben wird mit verbranntem Methan aus der anaeroben Klärschlammaufbereitung. Schließlich entsteht weitere Wärme durch den Stoffwechsel der thermophilen Mikroorganismen in der Entseuchungsstufe. Durch entsprechend gute Isolierung der Entseuchungsstufe sind die Wärmeverluste sehr gering. Sie werden durch die erfindungsgemäße Wiederverwendung der Abgase dieser Stufe noch geringer gehalten.

Der im Wärmeaustauscher abgekühlte, entseuchte Klärschlamm wird direkt in die anaerobe Klärschlammaufbereitung gepumpt, wobei er meistens die hierfür optimale Temperatur von 30 bis 40°C mitbringt. Statt der sonst häufig üblichen indirekten Beheizung der anaeroben Klärschlammaufbereitung im Faulturm genügt erfindungsgemäß meistens schon die direkte Beheizung durch Zuführung von warmem Klärschlamm aus der Entseuchungsstufe.

Das erfindungsgemäße Verfahren ist leicht steuerbar über leicht meßbare Parameter, nämlich die Verweilzeit in der Entseuchungsstufe, die Temperatur in der Entseuchungsstufe und der Sauer-

2

stoffgehalt in der Gasphase der Entseuchungsstufe, wobei nur bei Unterschreiten und Überschreiten der kritischen Grenzwerte des Sauerstoffgehaltes das Mischungsverhältnis zwischen Frischluft und zurückgeführtem Abgas verändert werden muß. Diese Maßnahmen lassen sich leicht, wartungsarm und zuverlässig automatisieren, so daß auch der Personalaufwand für die Überwachung außergewöhnlich gering gehalten werden kann und dennoch über lange Zeiträume die sichere Entseuchung gewährleistet bleibt. Der Sauerstoffgehalt der Gasphase kann nämlich leicht und störungsfrei gemessen werden, während es bisher nicht möglich ist, den Sauerstoffgehalt der Flüssigphase kontinuierlich zu messen. Obwohl es zur Vermeidung von anaeroben Prozessen an sich auf den Sauerstoffgehalt der Flüssigphase ankommt, kann erfindungsgemäß auf die Messung dieses Parameters verzichtet werden.

Das erfindungsgemäße Verfahren ist nicht nur für Neubauten von Kläranlagen geeignet, sondern kann auch ohne Probleme nachträglich in vorhandenen Kläranlagen mit anaerober Klärschlammaufbereitung zum Einsatz kommen. Dadurch wird auch deren Effizienz, Stabilität und Kapazität erhöht, so daß sich die Gesamtkosten trotz der vorgeschalteten Entseuchung nur unwesentlich verändern. Dabei ist zu beachten, daß die zuverlässige Entseuchung auch unter schwankenden Betriebsbedingungen einen hohen Wert darstellt, der nicht nur allein in Investitions-und Folgekosten bewertet werden kann.

## Ansprüche

1. Verfahren zur Entseuchung von Klärschlamm vor dem Einbringen in eine anaerobe Klärschlammaufbereitung unter Gewinnung von Methangas durch Erhitzung des Klärschlammes in einer vorgeschalteten Entseuchungsstufe auf 50 bis 70°C, vorzugsweise 55 bis 65°C, für eine Dauer von 1 bis 72 Stunden, vorzugsweise 12 bis 36 Stunden, bei intensiver Durchmischung des Klärschlammes mit einem sauerstoffhaltigen Gas, dadurch gekennzeichnet, daß als sauerstoffhaltiges Gas ein Gemisch aus 10 bis 70 Vol.-% Frischluft mit 30 bis 90 Vol.-% Abgas aus der Entseuchungsstufe verwendet wird, wobei der Sauerstoffgehalt des Gasgemisches im Bereich von 5 bis 15 Vol.-%, vorzugsweise 7 bis 12 Vol.-% gehalten wird.

2. Verfahren gemäß Anspruch 1, dadurch gekennzeichnet, daß es über die Parameter Verweilzeit, Temperatur und Sauerstoffgehalt in der Gasphase gesteuert wird.

**Europäisches Patentamt**

# EUROPÄISCHER RECHERCHENBERICHT

Nummer der Anmeldung

EP 89 10 7018

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 053 777 (METALLWERK AG BUCHS) * Seite 2, Zeilen 5-15; Seite 3, Zeilen 5-29; Seite 14, Anspruch 9 * | 1 | C 02 F 11/18 C 02 F 11/02 C 02 F 11/04 |
| A | | 2 | |
| A | G.M.F. WASSER ABWASSER, Band 125, Nr. 1, Januar 1984, Seiten 1-6, München, DE; F. WECHS: "Anaerobe Stabilisierung von pasteurisiertem Klärschlamm" * Seite 1, linke Spalte, Zeile 17 - rechte Spalte, Zeile 29 * | 1,2 | |
| A | G.W.F. WASSER/ABWASSER, Band 127, Nr. 9, September 1986, Seiten 442-448; K. BREITENBÜCHER: "Neue Einsatzbereiche für aerob-thermophile Prozesse zur Stabilisierung und Entseuchung von Abwasserschlämmen mit Bioenergienutzung" * Seite 443, rechte Spalte, Zeile 49 - Seite 444, linke Spalte, Zeile 46; Seite 445, rechte Spalte, Zeile 34 - Seite 446, linke Spalte, Zeile 42 * | 1,2 | |
| A | KORRESPONDENZ ABWASSER, Band 35, Nr. 1, Januar 1988, Seiten 71-74, ATV, St. AUGUSTIN, DE; "Entseuchung von Klärschlamm" * Seite 72, Zeile 60 -Seite 73, Zeile 12 * | 1,2 | RECHERCHIERTE SACHGEBIETE (Int. Cl.4) C 02 F |

Der vorliegende Recherchenbericht wurde für alle Patentansprüche erstellt

| Recherchenort | Abschlußdatum der Recherche | Prüfer |
|---|---|---|
| DEN HAAG | 18-07-1989 | GONZALEZ Y ARIAS M.L. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)